**Europäisches Patentamt**

**European Patent Office**

**Office européen des brevets**

(19)

(11) Veröffentlichungsnummer : **0 397 000 B1**

## (12) EUROPÄISCHE PATENTSCHRIFT

(45) Veröffentlichungstag der Patentschrift :
**13.10.93 Patentblatt 93/41**

(51) Int. Cl.$^5$ : **B01D 53/34**

(21) Anmeldenummer : **90108203.2**

(22) Anmeldetag : **30.04.90**

(54) **Verfahren zur Reduktion von Hypohalogeniten in alkalischen Prozesslösungen.**

(30) Priorität : **12.05.89 DE 3915604**

(43) Veröffentlichungstag der Anmeldung :
**14.11.90 Patentblatt 90/46**

(45) Bekanntmachung des Hinweises auf die
Patenterteilung :
**13.10.93 Patentblatt 93/41**

(84) Benannte Vertragsstaaten :
**BE DE FR GB IT NL**

(56) Entgegenhaltungen :
**DE-A- 2 849 498**
**DE-A- 3 603 511**

(73) Patentinhaber : **BASF Aktiengesellschaft**
**Carl-Bosch-Strasse 38**
**D-67063 Ludwigshafen (DE)**

(72) Erfinder : **Kochanek, Wolfgang, Dr.**
**Freiheitsstrasse 57**
**D-6730 Neustadt (DE)**
Erfinder : **Leutner, Bernd, Dr.**
**Taunusstrasse 17**
**D-6710 Frankenthal (DE)**

## Beschreibung

Die Absorption gasförmiger Schadstoffe aus Abgasen stellt in Zeiten zunehmenden Umweltbewußtseins einen wichtigen technischen Prozeß dar. Dabei sind Verfahren, bei denen die Schadstoffkomponente rein physikalisch in entsprechenden Waschlösungen absorbiert wird, von solchen Prozessen zu unterscheiden, bei denen diese mit der Waschflüssigkeit oder dort gelösten Verbindungen reagiert. Da im Falle der rein physikalischen Absorption die Geschwindigkeit des Gasübertritts in die flüssige Phase mit zunehmender Beladung der Waschflüssigkeit abnimmt, müssen relativ große Mengen dieser Lösung ständig im Kreislauf zwischen Absorption und Desorption hin- und herbewegt werden. Es ist daher nicht verwunderlich, daß die chemische Absorption, bei der die Konzentration des gelösten Schadgases in der Flüssigphase durch nachgelagerte Reaktion auf niedrigem Niveau gehalten wird, die physikalische Absorption an Bedeutung bei weitem übertrifft. Der Nachteil dieser Verfahrensvariante besteht in der Notwendigkeit, die Waschflüssigkeit bei erschöpfender Beladung zu erneuern, so daß in den Fällen, in denen sich eine Regeneration aus technisch/wirtschaftlichen Gründen verbietet, das ursprüngliche Abgasproblem in ein Abwasserproblem übergeführt wird. So werden z. B. die Abgase technischer Chlorierungsprozesse oftmals mit Natronlauge gewaschen, wobei das in diesem Abgas enthaltene Chlor nach R1 unter Hypochloritbildung disproportioniert:

$$R1: Cl_2 + 2\ OH^- \rightarrow Cl^- + OCl^- + H_2O$$

Die so erzeugte Bleichlauge ist im allgemeinen durch organische Verbindungen verunreinigt und kann daher nicht vermarktet werden. Eine direkte Entsorgung über eine Kläranlage ist ebenfalls nicht möglich, da die Lösung beim Absenken des pH-Wertes in Umkehrung obiger Gleichung Chlor entwickelt. Das gebildete Hypochlorit muß daher zuvor reduziert werden.

Als Reduktionsmittel kommen zu diesem Zweck insbesondere Verbindungen in Betracht, die aus verständlichen Gründen möglichst preiswert sein sollen, z.B. Sulfite, Bisulfite und Schwefeldioxid, die mit dem Hypochlorit reagieren (vgl. DE-A-36 03 511):

$$OCl^- + SO_3^{2-} \rightarrow Cl^- + SO_4^{2-}.$$

Bei Verwendung dieser Reduktionsmittel muß die Umsetzung genau am Äquivalenzpunkt abgebrochen werden, da bei einem Überschuß an Reduktionsmittel $SO_2$, bei einem Unterschuß dagegen Chlor entwickelt wird, sobald die Lösung (z.B. im Kanal) angesäuert wird. Eine Regelung der Sulfitzugabe über eine Potentialmessung, wie sie in der oben zitierten DE-A-36 03 511 beschrieben ist, liefert jedoch nur unbefriedigende Ergebnisse, da der Potentialsprung am Äquivalenzpunkt relativ gering ist und eine über- bzw. Unterdosierung des Reduktionsmittels nicht mit Sicherheit vermieden werden kann, so daß es kaum zu vermeiden ist, daß aus solchen reduzierend behandelten Ablaugen im Kanal entweder $SO_2$ oder $Cl_2$ freigesetzt wird.

Ähnliche Probleme bereitet die Aufarbeitung von Prozeßabwässern, wenn begleitende umweltschädliche Komponenten durch Zugabe von Bleichlauge zerstört werden sollen. Ein typisches Beispiel stellen Abwässer der Galvanikindustrie dar, bei denen die Cyanide durch Zugabe von überschüssigem Hypochlorit zu $N_2$ und $CO^2_3{}^-$ oxidiert werden. Auch hier muß das Abwasser vor seiner Abgabe in den Kanal zwecks Entfernung des Hypochlorits reduzierend behandelt werden.

Der vorliegenden Erfindung lag daher die Aufgabe zugrunde, ein Verfahren zur Reduktion von Hypohalogeniten in alkalischen Prozeßlösungen durch potentiometrisch geregelte Zugabe eines Reduktionsmittels bei pH-Werten oberhalb von 9 bereitzustellen, bei dem ein preiswertes Reduktionsmittel eingesetzt wird, das eine exakte Regelung der Reduktionsmittelzugabe ermöglicht, wobei gleichzeitig die oxidierte Form des Reduktionsmittels umweltneutral entsorgt werden kann.

Es wurde gefunden, daß diese Aufgabe dadurch gelöst werden kann, daß man als Reduktionsmittel Alkalicarbonylferrate verwendet und die Zugabe des Alkalicarbonylferrats unterbricht, wenn sich das Redoxpotential der alkalischen Prozeßlösung um mindestens 20 mV gegenüber dem Redoxpotential der Ausgangslösung verringert hat.

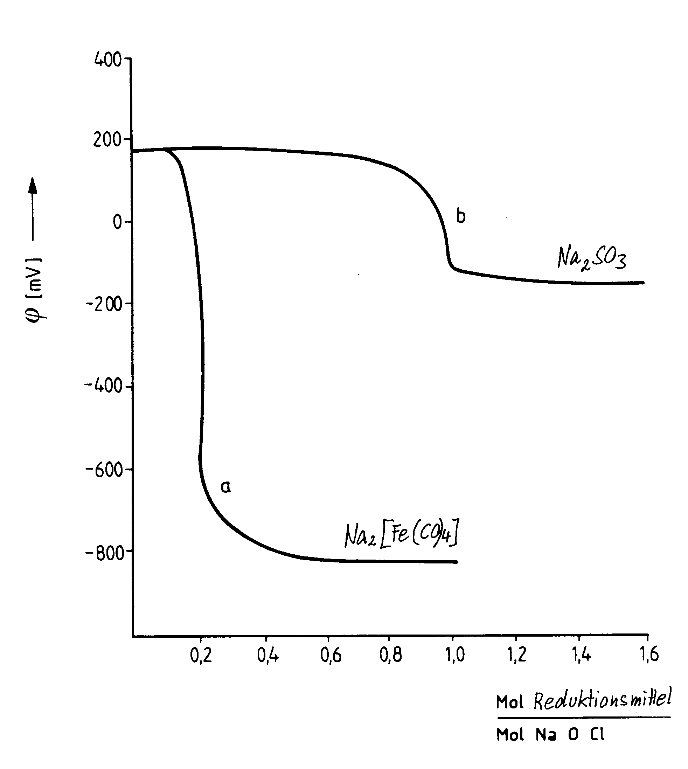

Während sich bei Zugabe des Alkalicarbonyferrats zu der hypohalogenithaltigen Prozeßlösung das Redoxpotential zunächst nur langsam ändert, erfolgt im Bereich des Äquivalenzpunktes ein sprunghafter Abfall des Redoxpotentials. Dies ist in der Figur veranschaulicht, in der die Potentialkurven einmal für den Reaktionsablauf mit $Na_2[Fe(CO)_4]$ bei 85°C und einmal mit Natriumsulfit, ebenfalls bei Temperaturen von 85°C veranschaulicht sind. Auf der Abszisse ist die Menge Reduktionsmittel in Mol pro Mol NaOCl und auf der Ordinate das Potential in mV, gemessen gegen die gesättigte Kalomelelektrode aufgetragen. Aus der Figur ist zu ersehen, daß bei Verwendung von $Na_2[Fe(CO)_4]$ im Äquivalenzpunkt ein deutlicher Potentialsprung mit ca. 900 mV auftritt (Kurve a), während bei Werwendung von Natriumsulfit am Äquivalenzpunkt ein wenig charakteristischer Potentialsprung (Kurve b) zu beobachten ist. Damit läßt sich aber mit dem erfindungsgemäßen Verfahren der Äquivalenzbereich sehr genau erkennen und es wird eine über- oder Unterdosierung des Reduktionsmittels mit Sicherheit vermieden.

Bei den erfindungsgemäß als Reduktionsmittel eingesetzten Alkalicarbonylferraten stehen pro Mol maximal 13 Elektronen zur Verfügung unter der Annahme, daß das $Fe^{2-}$ zu $Fe^{3+}$ und die CO-Liganden zu $CO_2$ oxidiert werden. In praxi verläuft die Reaktion aber so, daß das Eisen stets und die CO-Liganden nur zum Teil oxidiert werden.

Die erfindungsgemäpe Reduktion wird bei pH-Werten oberhalb von 9, vorzugsweise oberhalb von 11 durchgeführt. Wenn die zu behandelnde Prozeßlösung nur schwach alkalisch ist, kann es daher erforderlich sein, während der Reaktion neben dem Reduktionsmittel auch Lauge zuzuführen, um den pH-Wert oberhalb von 9 zu halten. Das Verfahren kann bei Raumtemperatur bis zum jeweiligen Siedepunkt der Prozeplösung, d.h. bei 20 bis 110°C durchgeführt werden.

Das erfindungsgemäße Verfahren kann sowohl kontinuierlich als auch diskontinuierlich durchgeführt werden. Da eine vollständige Umsetzung des Alkalicarbonylferrats nicht sofort erfolgt, sondern eine gewisse Zeit benötigt, ist es bei diskontinuierlicher Arbeitsweise zweckmäßig, die Reaktionslösung nach einiger Zeit, die sich nach pH-Wert und Temperatur richtet, stehen zu lassen, bevor man sie weiter entsorgt. In der Regel genügt hierfür ein Zeitraum von bis zu einer Stunde. Bei kontinuierlicher Arbeitsweise wird das Verfahren zweckmäpig in einer Kaskade von Rührbehältern, z.B. zwei Rührbehältern, durchgeführt. Hierbei wird dem ersten Rührbehälter das zu behandelnde Prozeßwasser und soviel Reduktionsmittel zugesetzt, daß sich das Redoxpotential der behandelten Lösung gegenüber dem unbehandelten Prozeßwasser um mindestens 20 mV vermindert. Die behandelte Lösung gelangt nun zum Ausreagieren in den zweiten Rührbehälter, dem allenfalls noch Lauge zugeführt werden muß, um den pH-Wert auf oberhalb 9 zu halten.

Beispiele 1 bis 12

In den ersten Reaktor einer zweistufigen Kaskade (Volumen 2 x 1 l) werden kontinuierlich 1,5 kg/h einer alkalischen Chlorgaswaschlösung mit einem Gehalt von 5 Gew.% NaOCl und einem pH-Wert von 9 eingeführt. Der pH-Wert der Chlorgaswaschlösung wird dabei im Reaktor durch Zugabe von Natronlauge auf den in Spalte 2 der Tabelle 1 angegebenen Wert angehoben. Im Reaktor wird die in Spalte 3 angegebene Temperatur eingestellt. In Spalte 4 ist das Redoxpotential $\varphi_0$ dieser Ausgangslösung, gemessen gegen die gesättigte Kalomelelektrode, angegeben. Unter Beibehaltung der einmal eingestellten Temperatur und des pH-Wertes wird dem Reaktor 16,4 gew.%ige Natriumcarbonylferrat lösung (hergestellt durch Umsetzung von 150 g Eisenpentacarbonyl mit 153 g NaOH in 697 g Wasser) kontinuierlich zugeführt, wobei die Zulaufgeschwindigkeit so geregelt wird, daß sich im Reaktor das in Spalte 5 der Tabelle 1 angegebene Redoxpotential einstellt. Das Reaktionsgemisch wird kontinuierlich dem ersten Reaktor entnommen, in den zweiten Reaktor übergeführt, und dort 40 Minuten unter Beibehaltung der in Spalte 2 angegebenen pH-Werte (durch Zugabe von weiterer Natronlauge) nachreagieren gelassen. Im Austrag des zweiten Reaktors werden als Oxidationsprodukte FeO(OH) und $Na_2CO_3$ neben HCOONa und CO gefunden. Die in Spalte 10 aufgeführten Werte für gelöstes Eisen belegen, daß im Austrag praktisch kein Carbonylferrat vorhanden ist, und daß das Hypochlorit, wie der letzten Spalte zu entnehmen ist, praktisch vollständig reduziert worden ist.

In Spalte 7 der Tabelle ist die pro Mol NaOCl verbrauchte Molmenge an Carbonylferrat angegeben, aus der sich die in Spalte 8 pro Mol Carbonylferrat abgegebenen Elektronen berechnen. In Spalte 9 ist die experimentell bestimmte Menge des bei der Reaktion gebildeten CO angegeben, wobei jedes CO zwei nicht genutzten Elektronen gleichzusetzen ist. Gasförmig entweichendes CO stört den Prozeß nicht, da es unverdünnt anfällt und damit ohne weiteres abgefackelt werden kann.

Tabelle 1

| Versuch Nr. | pH | 1. Rührkessel T₁/°C | φ₀/mV | φ₁/mV | 2. Rührkessel φ₂/mV | $\dfrac{\text{Mol } [Fe(CO)_4]^{2-}}{\text{Mol NaOCl}}$ | $\dfrac{\text{Mol } e^-}{\text{Mol } [Fe(CO)_4]^{2-}}$ | $\dfrac{\text{Mol CO}}{\text{Mol } [Fe(CO)_4]^{2-}}$ | Fe mg/l | OCl⁻ Umsatz % |
|---|---|---|---|---|---|---|---|---|---|---|
| 1 | 14 | 60 | 325 | 180 | -840 | 0,191 | 10,47 | 0,93 | 4 | 99,9 |
| 2 | 14 | 80 | 310 | 180 | -760 | 0,191 | 10,47 | 1,03 | 1 | 99,9 |
| 3 | 14 | 90 | 301 | 180 | -600 | 0,180 | 11,10 | 0,62 | < 1 | 98,8 |
| 4 | 14 | 90 | 301 | 280 | -360 | 0,218 | 9,18 | 0,63 | < 1 | 96,9 |
| 5 | 14 | 90 | 301 | 160 | -430 | 0,193 | 10,37 | 0,89 | < 1 | 99,6 |
| 6 | 14 | 90 | 301 | 110 | -420 | 0,198 | 10,09 | 0,92 | < 1 | 99,7 |
| 7 | 14 | 90 | 301 | 70 | -410 | 0,201 | 9,97 | 1,04 | < 1 | 99,9 |
| 8 | 10 | 80 | 713 | 280 | -380 | 0,187 | 10,69 | 0,77 | n.b. | 99,9 |
| 9 | 11 | 80 | 540 | 280 | -160 | 0,183 | 10,92 | 1,01 | n.b. | 99,9 |
| 10 | 12 | 80 | 485 | 280 | -200 | 0,179 | 11,17 | 0,83 | 2 | 99,8 |
| 11 | 13 | 80 | 366 | 280 | -270 | 0,168 | 11,91 | 0,41 | 3 | 99,8 |
| 12 | 14 | 80 | 310 | 280 | -280 | 0,166 | 12,05 | 0,30 | < 1 | 99,8 |

Beispiele 13 bis 18

Dem ersten Reaktion der in Beispiel 1 beschriebenen Reaktorkaskade wird anstelle der dort genannten Chlorwaschlösung stündlich 1,5 kg einer 4,1 gew.%igen Natriumhypobromitlösung zugeführt, deren pH-Wert 9,1 beträgt. Der pH-Wert der Lösung wird in diesem Reaktor auf den in Spalte 2 der Tabelle 2 angegebenen Wert und die Temperatur auf den in Spalte 3 angegebenen Wert eingestellt. Das Ausgangspotential $\varphi_0$ ist in Spalte 4 angegeben. Wie in Beispiel 1 angegeben wird die dort beschriebene Natriumcarbonylferrat-Lösung zugegeben, deren Zulaufmenge so geregelt wird, daß sich in der Reaktionslösung das in Spalte 5 der Tabelle 2 angegebene Redoxpotential einstellt. Im zweiten Reaktor der Kaskade wird das Reaktionsgemisch während einer Verweilzeit von ca. 40 min. unter Aufrechterhaltung des zuvor eingestellten pH-Wertes nachreagieren gelassen. Aus den beiden letzten Spalten ist zu ersehen, daß die behandelte Lösung praktisch kein gelöstes Carbonylferrat mehr enthält und das NaOBr praktisch vollständig reduziert worden ist.

Tabelle 2

| Versuch Nr. | pH | 1. Rührkessel | | | 2. Rührkessel | $\dfrac{\text{Mol } [Fe(CO)_4]^{2-}}{\text{Mol NaOBr}}$ | $\dfrac{e^-}{\text{Mol } [Fe(CO)_4]^{2-}}$ | $\dfrac{\text{Mol CO}}{\text{Mol } [Fe(CO)_4]^{2-}}$ | Fe | NaOBr Umsatz |
| | | $T_1/{}^{\circ}C$ | $\varphi_0/mV$ | $\varphi_1/mV$ | $\varphi_2/mV$ | | | | mg/l | % |
| --- | --- | --- | --- | --- | --- | --- | --- | --- | --- | --- |
| 13 | 14 | 60 | 384 | 125 | −660 | 0,263 | 7,61 | 1,41 | < 1 | 99,8 |
| 14 | 14 | 60 | 384 | 125 | −700 | 0,249 | 8,02 | 0,93 | < 1 | 99,9 |
| 15 | 14 | 103 | 371 | 125 | −710 | 0,244 | 8,20 | 0,86 | 3 | 98,9 |
| 16 | 11 | 90 | 605 | 125 | −410 | 0,273 | 7,32 | 1,53 | n.b. | 98,9 |
| 17 | 14 | 90 | 376 | 100 | −720 | 0,241 | 8,31 | 0,99 | 1 | 99,9 |
| 18 | 14 | 90 | 376 | 80 | −780 | 0,251 | 7,98 | 1,14 | 4 | 99,9 |

**Patentansprüche**

1. Verfahren zur Reduktion von in alkalischen Prozeßlösungen enthaltenen Hypohalogeniten durch potentiometrisch geregelte Zugabe eines Reduktionsmittels bei pH-Werten oberhalb von 9, dadurch gekennzeichnet, daß man als Reduktionsmittel Alkalicarbonylferrate verwendet und die Zugabe des Alkalicarbonylferrats unterbricht, wenn sich das Redoxpotential der alkalischen Prozeßlösung um mindestens 20 mV gegenüber dem Redoxpotential der Ausgangslösung vermindert hat.

2. Verfahren nach Anspruch 1, dadurch gekennzeichnet, daß man die Prozeßlösung nach Zugabe des Alkalicarbonylferrats nachreagieren läßt.

3. Verfahren nach Ansprüche 1 bis 2, dadurch gekennzeichnet, daß man die Reduktion bei Temperaturen von 20 bis 110°C durchführt.

**Claims**

1. A process for reducing hypohalites in alkaline process solutions by potentiometrically controlled addition of a reducing agent at a pH above 9, which comprises using alkaline metal carbonylferrates as reducing agent and ending its addition when the redox potential of the alkaline process solution has decreased by at least 20 mV from the initial value.

2. A process as claimed in claim 1, wherein the process solution is allowed to react further after addition of the alkaline metal carbonylferrate.

3. A process as claimed in either claim 1 or 2, wherein the reduction is carried out at temperatures of from 20 to 110°C.

**Revendications**

1. Procédé de réduction d'hypohalogénites obtenus dans des solutions de traitement alcalines, par l'addition potentiométriquement régulée d'un agent réducteur, à des valeurs de pH supérieures à 9, caractérisé en ce que l'on utilise, à titre d'agent réducteur, des carbonylferrates de métaux alcalins et on interrompt l'addition du carbonylferrate de métal alcalin lorsque le potentiel redox de la solution de traitement alcaline a diminué d'au moins 20 mV vis-à-vis du potentiel redox de la solution de départ.

2. Procédé suivant la revendication 1, caractérisé en ce qu'on laisse postréagir la solution de traitement après l'addition du carbonylferrate de métal alcalin.

3. Procédé suivant les revendications 1 et 2, caractérisé en ce que l'on entreprend la réduction à des températures de 20 à 110°C.